# EUROPÄISCHE PATENTSCHRIFT

(11) **EP 2 071 685 B1**
(45) Veröffentlichungstag und Bekanntmachung des Hinweises auf die Patenterteilung: **22.01.2014**
(21) Anmeldenummer: 07120664.3
(22) Anmeldetag: 14.11.2007
(51) Int. Cl.: H02B 1/28, H02B 1/52

(54) **Raumzelle zur Aufnahme von elektrotechnischen Einheiten der Gebäudetechnik**
Module for receiving electrical units in construction engineering
Structure destinée à la saisie d'unités électrotechniques de la technique de bâtiment

(43) Veröffentlichungstag der Anmeldung: 17.06.2009
(73) Patentinhaber: Schraner GmbH, 91058 Erlangen (DE)
(72) Erfinder: Schraner, Stefan, 91058 Erlangen (DE)
(74) Vertreter: Lösch, Christoph Ludwig Klaus

(56) Entgegenhaltungen:
- DE-A1- 10 128 349
- US-A- 4 818 970
- US-A- 5 200 735
- US-A- 5 257 007
- US-A- 5 463 595
- US-B1- 6 380 860

## Beschreibung

Die Erfindung betrifft eine Raumzelle zur Aufnahme von elektrotechnischen Einheiten der Gebäudetechnik.

In modernen Gebäuden gibt es eine Vielzahl von elektrotechnischen Einheiten, Anlagen und Einrichtungen, die funktionell dem Gebäude zugerechnet werden können und daher allgemein als Anlagen der Haus-oder Gebäudetechnik bezeichnet werden.

Dabei weisen diese Einrichten meist im Gebäude verteilte Sensoren und/oder Aktoren auf, die über ein Leitungsnetz mit elektrotechnischen Zentraleinheiten, die beispielsweise für die Aufnahme der Sensordaten, die entsprechenden Steuerungs- bzw. Regelungsaufgaben sowie die Ansteuerung der Aktoren zuständig sind, verbunden sind. Beispiele für Netze der Gebäudetechnik wären etwa das Beleuchtungs-, Klima-, Belüftung-, Verschattungs- oder Zutrittskontrollnetz, Kommunikationsnetze wie Telefon- oder Computernetzwerke sowie Netze für Alarm- und Sicherheitssysteme, wie Brandmeldesysteme und Einbruchsmelde-systeme.

Die gebäudetechnischen Einheiten weisen innerhalb des Gebäudes je nach Größe einen beachtlichen Raumbedarf auf. Insbesondere die jeweiligen Zentraleinheiten befinden sich im Allgemeinen in separaten Technikräumen. Dies hat den Nachteil, dass diese Gebäuderäume nicht mehr für andere Zwecke genutzt werden können.

US 6,380,860 B1 beschreibt einen Koffer mit einem Feuerwehralarmsystem, wobei im Koffer u.a. Rauchmelder vorgesehen sind sowie Elemente zur Alarmauslösung, falls die Rauchmelder Rauch detektieren. Ferner ist eine Druckausgleichsvorrichtung vorgesehen, durch welche der Innendruck des Koffers bei Veränderungen des Außendrucks (z.B. durch Höhenverlagerung des Koffers) ausgeglichen werden kann.

US 5,200,735 A beschreibt ein wettergeschütztes Sicherheitssystem für den Außeneinsatz. US 5,257,007 A beschreibt ein tragbares Sicherheitssystem.

Der Erfindung liegt die Aufgabe zugrunde, den Platzbedarf für die Gebäudetechnik innerhalb eines Gebäudes zu verringern und dadurch das Raumangebot für andere Zwecke zu steigern.

Diese Aufgabe wird durch die Merkmale des Patentanspruchs 1 gelöst. Vorteilhafte Ausführungsformen sind in den Unteransprüchen 2 - 9 beschrieben.

Die erfindungsgemäße Raumzelle zur Aufnahme von elektrotechnischen Einheiten der Gebäudetechnik besitzt eine selbsttragende, witterungsbeständige Außenhülle. Durch die Außenhülle werden die in der Raumzelle aufgenommenen elektrotechnischen Einheiten vor Umwelteinflüssen geschützt und es ist möglich, die Raumzelle außerhalb eines Gebäudes aufzustellen. Die in der Raumzelle aufgenommenen elektrotechnischen Einheiten der Gebäudetechnik beanspruchen somit keinen Raum innerhalb des Gebäudes mehr. Dadurch wird der Platzbedarf für die Gebäudetechnik innerhalb des Gebäudes verringert und das Raumangebot für andere Zwecke steigt.

Bei den in der Raumzelle aufgenommenen elektrotechnischen Einheiten der Gebäudetechnik kann es sich sowohl um Sensoren, Aktoren, Steuer-, Mess-, Regeleinheiten, als auch um andere Einheiten der Gebäudetechnik handeln. Insbesondere können in die Raumzelle gebäudetechnische Zentraleinheiten wie beispielsweise zentrale Telekommunikationsanlagen, Alarmanlagen oder Brandmeldezentralen aufgenommen werden. Werden derartige Zentraleinheiten innerhalb der Raumzelle platziert hat dies den Vorteil, dass im Gebäude komplette Technikräume wegfallen und diese Räume für andere Zwecke genutzt werden können.

Außerdem weist die Raumzelle mindestens einer Schnittstelle zu einem gebäudeseitigen elektrotechnischen Netz auf. Dadurch stehen die in der Raumzelle aufgenommenen elektrotechnischen Einheiten mit dem jeweiligen gebäudeseitigen Netz in Verbindung. Dabei kann diese Schnittstelle derart ausgebildet sein, dass sie für die Aufnahme von elektrotechnischen Leitungen wie beispielsweise Strom-, Telefon- oder Signalleitungen geeignet ist. Sie kann jedoch auch derart ausgebildet sein, dass sie zur Aufnahme von schnurlos versandten Signalen geeignet ist. Dadurch kann eine aufwändige Verdrahtung zur Raumzelle vermieden werden.

Außerdem ist mindestens einer Schnittstelle zu einem externen elektrotechnischen Netz vorhanden. Dadurch kann die Raumzelle als Verbindungselement zwischen einem gebäudeseitigen und einem externen Netz dienen. Damit kann der häufig im Gebäude vorhandene Anschlussraum als Schnittstelle zwischen öffentlichem Versorgungsnetz und gebäudeinternem Netz entfallen. Außerdem ist der Zugang zur Schnittstelle zu dem externen Netz, beispielsweise aus Wartungs- oder Anschlusszwecken, auch ohne Zugang zum Gebäude möglich.

Daneben weist die Raumzelle Einbauplätzen für vormontierte Einheiten der Gebäudetechnik auf. Durch diese Einbauplätze ist eine besonders schnelle und einfache Montage von standardisierten bzw. vormontierten Einheiten der Gebäudetechnik möglich.

Außerdem beinhaltet die Raumzelle mindestens eine Klimaanlage. Dadurch ist es möglich innerhalb der Raumzelle das dort herrschende Klima, insbesondere die Temperatur und/oder die Luftfeuchtigkeit, zu steuern bzw. zu regeln. So kann das Innenklima der Raumzelle den dort eingebauten Einheiten der Gebäudetechnik angepasst werden, damit diese nicht beschädigt werden. Auch ist es möglich die elektrotechnischen Elemente durch eine Wärmeisolation an der Außenhülle der Raumzelle vor schädlichen Klimaeinflüssen zu schützen.

Des Weiteren ist die Raumzelle im vorgefertigten Zustand transportabel. Damit kann sie beispielsweise in einer Fabrikhalle unter optimierten Arbeitsbedingungen vorgefertigt werden und anschließend an den Einsatzort gebracht werden, was etwa zu einer kostengünstigen und schnellen Montage führt.

In einer vorteilhaften Ausführungsform weist die Raumzelle mindestens eine Transporthilfseinrichtung auf. Dadurch ist ein besonders schneller oder sicherer Transport der Raumzelle möglich. Dabei können derartige Transporthilfseinrichtung sowohl den Transport der Raumzelle während der Montage, als auch den Transport im vormontierten Zustand sowie den Transport von einem Gebäude zu einem anderen Gebäude erleichtern. Insbesondere kann die Transporthilfseinrichtung als Transporthaken ausgebildet sein. So ist es beispielsweise möglich, die Raumzelle mit einem Kran zu transportieren. Auch kann die Transporthilfseinrichtung als Transportfuß ausgebildet sein. So ist es beispielsweise möglich die Raumzelle schnell und sicher mit einem Gabelstapler zu bewegen.

In einer weiteren vorteilhaften Ausführungsform besitzt die Raumzelle eine Energieversorgungseinrichtung. Damit ist es möglich, innerhalb der Raumzelle auf elektrische Energie zurückzugreifen. Hierbei kann die Energieversorgungseinrichtung autark von der Energieversorgung des Gebäudes, insbesondere als Notstromaggregat oder Akkumulator, ausgebildet sein. Dies hat den Vorteil, dass die innerhalb der Raumzelle angeordneten Elemente auch bei Störung der externen Stromversorgung betrieben werden können, was diesen Teil der Gebäudetechnik besonders ausfallsicher und zuverlässig macht.

In einer weiteren vorteilhaften Ausführungsform weist die Raumzelle eine Kommunikationseinrichtung auf. Dabei kann die Kommunikationseinrichtung etwa in Form eines Haustelefons oder einer Funkeinrichtung derart gestaltet sein, dass sie die Kommunikation mit Personen innerhalb des Gebäudes bzw. der näheren Umgebung ermöglicht. Durch diese interne Kommunikation kann schnell und gezielt beispielsweise bei technischen Problemen mit den verantwortlichen Stellen in Verbindung getreten werden.

Auch ist es möglich, dass die Telekommunikationseinrichtung an ein öffentliches Telefon-, Datenübertragungs- oder Mobilfunknetz angeschlossen ist. Dadurch ist es beispielsweise in Notfällen möglich, extern Hilfsdienste zu verständigen.

Gemäß einer vorteilhaften Ausführungsform ist über die Schnittstelle zu einem gebäudeseitigen elektrotechnischen Netz eine Verbindung zu einem gebäudeseitigen elektrotechnischen Netz herstellbar, welches mindestens einen Sensor und/oder mindestens einem Aktor aufweist. Durch eine derartige Schnittstelle wird der Sensor und/oder Aktor mit Einheiten innerhalb der Raumzelle verbunden. In besonders vorteilhafter Weise befindet sich die gebäudetechnische Zentraleinheit, die Signale des Sensors verarbeitet bzw. Steuerbefehle an den Aktor gibt, innerhalb der Raumzelle. Dann ist es möglich, dass die Zentraleinheit platzsparend und leicht zugänglich in der Raumeinheit eingebracht ist, gleichzeitig kann diese über die Schnittstelle mit den im Gebäude befindlichen Sensor bzw. Aktor in Verbindung treten.

In einer weiteren vorteilhafte Ausführungsform ist die elektrotechnische Einheit, die sich in der Raumzelle befindet, als Alarm- und/oder Sicherheitssystem ausgebildet ist. Beispielsweise kann es sich um eine Alarmanlage, eine Überwachungsanlage oder eine Brandschutzanlage handeln. Durch die Anordnung eines derartigen Systems nicht innerhalb des Gebäudes, sondern in der Raumzelle, ist ein besonders schneller und leichter Zugang zu den Anlagen möglich. So ist es beispielsweise für das Personal des Wachdienstes oder für Polizei und Rettungskräfte möglich, auf das Alarm- bzw. Sicherheitssystem zurückzugreifen, auch ohne in das eigentliche Gebäude eindringen zu müssen.

Insbesondere kann das Alarm- bzw. Sicherheitssystem derart ausgebildet sein, dass Schnittstellen zum gebäudeseitigen Netz Signale von im Gebäude befindlichen Sensoren in die Rauzelle einleitet, die von einer sich innerhalb der Raumzelle angeordneten zentralen Steuer-, Mess-, und Regeleinheit verarbeitet werden sowie weitere Schnittstellen Steuerungssignale von Einheiten innerhalb der Raumzelle zu im Gebäude befindlichen Sensoren weiterleiten. Außerdem können in der Raumzelle zugehörige Bedienelemente vorhanden sein, die es den jeweiligen Mitarbeitern des Wachdienstes bzw. der Polizei oder Feuerwehr erlauben, in das Alarm- bzw. Sicherheitssystem einzugreifen.

Insbesondere kann die Schnittstelle zu einem externen elektrotechnischen Netz als Schnittstelle zu einem Kommunikationsnetz gestaltet sein. Ist in der Raumzelle ein Steuerungszentrale eines Alarm- bzw. Sicherheitssystems vorhanden, so kann diese derart ausgebildet sein, dass sie über die Schnittstelle mit relevanten externen Stellen in Verbindung steht. Dies hat den Vorteil, dass entweder eine Fernüberwachung oder die Alarmierung von Hilfskräften besonders schnell und unkompliziert möglich ist.

Bei den relevanten externen Stellen, mit denen die Steuerungszentrale des Alarm- bzw. Sicherheitssystems, über das Kommunikationsnetz in Verbindung tritt, kann es sich beispielsweise um einen Wachdienst, einen zentralen Überwachungsleitstand, den für das Gebäude zuständigen Haustechniker, die Polizei, die Feuerwehr oder andere Hilfs- und Rettungsdienste handeln.

Dabei kann die Verbindung zum Kommunikationsnetz derart ausgebildet sein, dass eine permanente Verbindung zwischen der Einheit innerhalb der Raumzelle und der externen Stelle vorhanden ist. Sie kann jedoch auch derart ausgebildet sein, dass eine Verbindung nur im Alarmfall aufgebaut wird.

In einer weiteren vorteilhaften Ausführungsform ist die elektrotechnische Einheit als Brandmeldezentrale (BMZ) ausgebildet. Dadurch braucht die Feuerwehr im Brandfall nicht in das Gebäude bis in den Technikraum vordringen, in dem die Brandmeldeeinrichtungen des Gebäudes normalerweise gesammelt sind. Es genügt vielmehr das Erreichen der Raumzelle, die vorteilhafterweise in einem Bereich aufgebaut wird, der von der Feuerwehr schnell und gefahrlos erreicht werden kann. Dies führt zu einer Verkürzung der Zeitspanne zwischen Alarmierung der Feuerwehr und dem Beginn der Löscharbeiten. Bei dieser Ausführungsform wird die BMZ damit außerhalb des Gebäudes installiert und es muß kein separater Raum im Inneren des Gebäudes mehr bereitgestellt werden.

Unter einer BMZ ist dabei insbesondere die zentrale Einheit eines Brandmeldesystems zu verstehen, welches die Sensorsignale der Brandmeldesensoren erfasst und im Alarmfall die Feuerwehr benachrichtigt.

Insbesondere kann die BMZ über die Schnittstelle zum externen elektrotechnischen Netz mit der Rettungsleitstelle der Feuerwehr verbunden sein. Dadurch ist eine automatische Alarmierung der Feuerwehr möglich.

Auch kann die Schnittstelle zum externen Netz derart gestaltet sein, dass beispielsweise die Feuerwehr über die Schnittstelle Zugriff auf die BMZ erhält, was der Feuerwehr eine Beeinflussung der in der Raumzelle befindlichen Einheiten ermöglicht, ohne selbst vor Ort anwesend sein zu müssen.

Nach einer weiteren vorteilhaften Gestaltung weist die Raumzelle mindestens eine als Feuermelder ausgebildete Einheit der Gebäudetechnik technik auf. Dadurch wird die Raumzelle selbst auf Feuer überwacht und es kann jederzeit überprüft werden, ob die in der Raumzelle untergebrachten Einheiten durch Feuer in Gefahr sind bzw. in ihrer Funktionsfähigkeit beeinträchtig sein könnten.

In einer besonders vorteilhaften Ausführungsform ist in der Raumzelle sowohl ein Feuermelder als auch eine BMZ vorhanden. Dadurch kann jederzeit festgestellt werden, ob die Funktionsfähigkeit der BMZ durch ein Feuer innerhalb der Raumzelle beeinträchtigt sein kann. Gleichzeitig kann durch einen derartigen Aufbau der Raumzelle etwaigen Brandschutz-Sicherheitsvorschriften entsprochen werden.

Erfindungsgemäß sind Einheiten der Gebäudetechnik, die sich innerhalb der Raumzelle befinden als Feuerwehranzeigetableau (FAT), als Feuerwehrbedienfeld (FBF) und/oder als Feuerwehrschlüsseldepot (FSD) ausgebildet. Auch ist es möglich weitere für die Feuerwehr bzw. Rettungskräfte wichtige Einrichtungen und Informationen innerhalb der Raumzelle zur Verfügung zu stellen. So ist es beispielsweise auch möglich, einen Alarmknopf zum Auslösen eines Alarms, eine Signalvorrichtung, wie zum Beispiel ein Blinklicht oder eine Sire und/oder Ablagesysteme für Gebäude- oder Schaltpläne, z.B. für Feuerwehrlaufkarten oder Feuerwehreinsatzpläne, zu integrieren. Durch die Integration derartiger Komponenten innerhalb der Raumzelle sind für die Feuerwehr wichtige Informations- und Bedieneinheiten des Brandmeldesystems leicht erreichbar außerhalb des Gebäudes platzierbar. Durch die Sammlung dieser Elemente in räumlicher Nähe zueinander ist es für die Rettungskräfte möglich, zentral auf alle relevanten Einheiten und Informationen zurückzugreifen.

Die Erfindung ist anhand von Ausführungsbeispielen in den Zeichnungsfiguren weiter erläutert. Es zeigen:
- Fig. 1: eine schematische Darstellung einer erfindungsgemäßen Raumzelle und eines Gebäudes,
- Fig. 2: eine schematische Perspektiv-Darstellung einer erfindungsgemäßen Raumzelle und eines Gebäudeausschnitts.

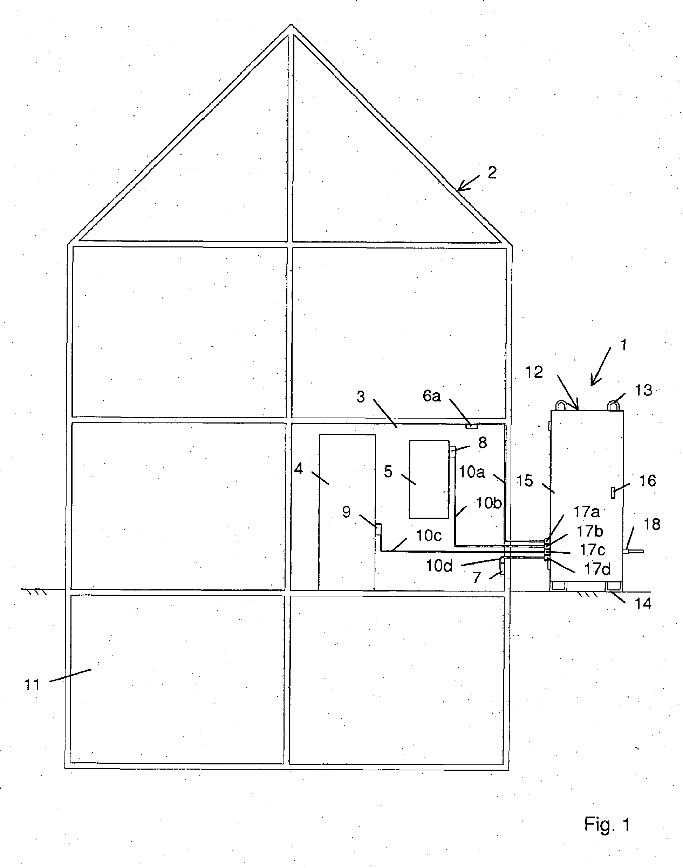

Fig. 1 zeigt in einer schematischen Darstellung eine erfindungsgemäße Raumzelle 1 und ein Gebäude 2. Das Gebäude 2 ist in einer schematisierten Schnittdarstellung dargestellt. Innerhalb des Gebäudes 2 gibt es verschiedene Räume. Dabei ist in Fig.1 ein Nutzraum 3 mit einer Tür 4 und einem Fenster 5 ausgestattet. Unter dem Nutzraum 3 wird dabei ein herkömmlicher Raum des Gebäudes 2 verstanden, der je nach Zweck des Gebäudes 2 in unterschiedlicher Weise genutzt wird, beispielsweise als Wohnraum, Büro, Fabrikhalle, sanitäre Einrichtung, usw..

Im Nutzraum 3 sind Sensoren der Gebäudetechnik vorhanden, die als Feuermelder 6a und Bewegungsmelder 7 ausgebildet sind. Auch sind der Gebäudetechnik zugeordnete Aktoren, in Form eines Rauchabzuges 8 und einer Türverriegelungsvorrichtung 9 innerhalb des Nutzraumes 3 vorhanden. Diese Aktoren und Sensoren sind über Leitungen 10a, 10b, 10c und 10d an ein gebäudetechnisches Leitungsnetz angeschlossen. Im Gebäude können mehrere Nutzräume vorhanden sein, welche in ähnlicher Weise wie der beschriebene Nutzraum 3 ausgestattet sind.

Daneben ist in herkömmlicher Weise im Gebäude 2 mindestens ein Technikraum 11 vorhanden, der weitere Anlagen und Einrichtungen der Gebäudetechnik, wie etwa zentrale Steuerungseinheiten enthält und bei dem das Leitungsnetz der Sensoren und Aktoren zusammenläuft.

Erfindungsgemäß braucht dieser Technikraum 11 nicht mehr für Einrichtungen und Einheiten der Gebäudetechnik vorgehalten werden und kann für andere Zwecke genutzt werden. Die in herkömmlicher Weise in dem Technikraum 11 untergebrachten Einheiten sind erfindungsgemäß in der Raumzelle 1 untergebracht. Die Raumzelle 1 ist außerhalb des Gebäudes 2 abgestellt. Dabei ist die Raumzelle 1 transportabel ausgeführt. Sie besitzt eine selbsttragende, witterungsbeständige Außenhülle 12. Außerdem weist sie Transporthilfseinrichtungen in Form von Transporthaken 13 und Transportfüßen 14 auf. Auch weist die Raumzelle 1 eine Raumzellentür 15 auf, die mit einer Schließvorrichtung 16 verschlossen wird. Dadurch kann eine Bedienung der in der Raumzelle 1 befindlichen Einheiten und Anlagen durch nicht berechtigte Personen verhindert werden. Des Weiteren weist die Raumzelle 1 Schnittstellen zu gebäudeseitigen elektrotechnischen Netzen 17a, 17b, 17c und 17d sowie eine Schnittstelle zu einem externen elektrotechnischen Netz 18 auf.

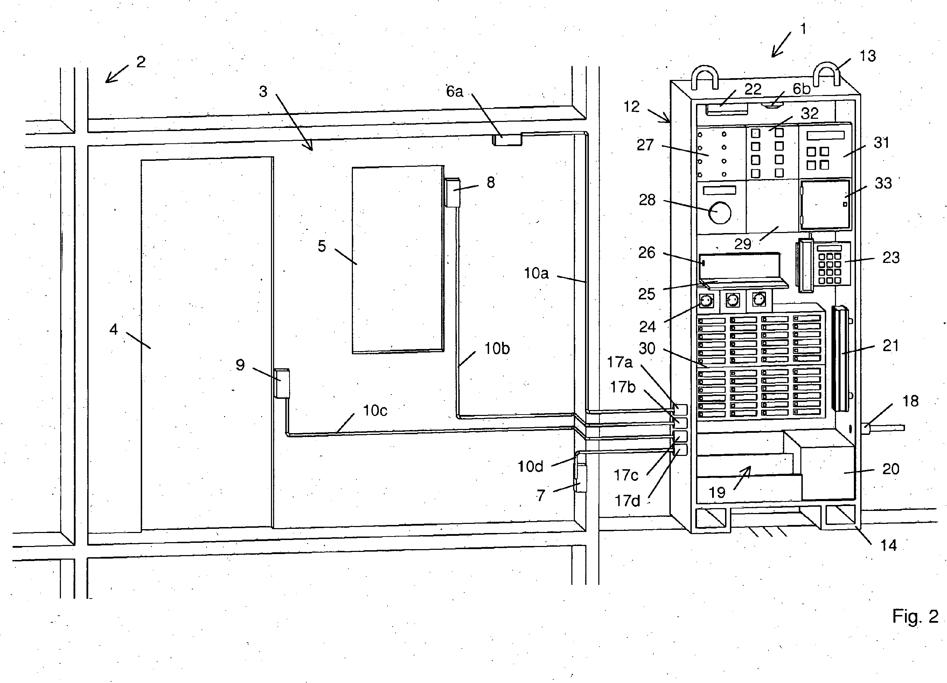

Fig. 2 zeigt eine schematische Perspektiv-Darstellung einer erfindungsgemäßen Raumzelle mit einem Gebäudeausschnitt. Der Gebäudeausschnitt stellt einen Ausschnitt des in Fig. 1 dargestellten Gebäudes 2 dar, der im wesentlichen den in Fig. 1 schematisch dargestellten Nutzraum 3 mit der Tür 4, dem Fenster 5, dem Feuermelder 6a, dem Bewegungsmelder 7, dem Rauchabzug 8, der Türverriegelungsvorrichtung 9 sowie den Leitungen 10a, 10b, 10c und 10d eines gebäudeseitigen elektrotechnischen Netzes beinhaltet.

Außerhalb des Gebäudes 2 befindet sich eine erfindungsgemäße Raumzelle 1. Die Leitungen 10a, 10b, 10c und 10d stehen mit jeweils einer Schnittstelle zum gebäudeseitigem Netz 17a, 17b, 17c und 17d in Verbindung. Daneben weist die Raumzelle 1 eine Schnittstelle zu einem externen Netz 18 auf, wobei diese Schnittstelle 18 derart ausgebildet ist, dass sie mit einem externen Kommunikationsnetzwerk in Verbindung steht. An der witterungsbeständigen, selbsttragenden Außenhülle 12 sind Transporthaken 13 und Transportfüße 14 angebracht, was zu einer einfachen und schnellen Transportfähigkeit der Raumzelle 1 führt. Dabei sind die Transportfüße 14 derart ausgebildet, dass die Raumzelle 1 von einem Gabelstapler sicher aufgenommen und transportiert werden kann.

In Fig. 2 nicht dargestellt ist die Tür der Raumzelle 1, die zusammen mit den weiteren Wandelementen die geschlossene Außenhülle 12 der Raumzelle 1 bildet, um die innerhalb der Raumzelle 1 angeordneten Elemente vor Witterungseinflüssen und vor Zugriff durch Unbefugte zu schützen.

Innerhalb der Raumzelle 1 ist ein Ablagesystem für Gebäudepläne 19 vorhanden. Hierin können beispielsweise Feuerwehr-Einsatzpläne oder Feuerwehr-Laufkarten schnell auffindbar abgelegt werden. Daneben ist eine Energieversorgungseinrichtung 20 vorhanden, die die innerhalb der Raumzelle angeordneten Elemente mit elektrischer Energie versorgen kann.

Eine Klimaanlage 21 sorgt als Element zur Beeinflussung des Klimas innerhalb der Raumzelle dafür, dass das Raumklima innerhalb eines vorgegebenen Bereichs gehalten werden kann. Eine Beleuchtungseinrichtung 22 spendet bei Bedarf Licht und erleichtert dadurch die Bedienung der in der Raumzelle 1 angebrachten Elemente. Daneben ist eine als Telefon 23 ausgebildete Kommunikationsvorrichtung vorhanden. An die Steckdosen 24 können bei Bedarf weitere elektronische Geräte angeschlossen werden.

Eine Ablagefläche 25 dient dazu beispielsweise ein Notebook (in Fig. 2 nicht dargestellt) sicher ablegen zu können. Dieses Notebook kann über eine EDV-Schnittstelle 26 mit einzelnen der in der Raumzelle 1 vorhandenen elektrischen Komponenten in Verbindung treten und beispielsweise Steuerungs- oder Regelungsaufgaben übernehmen.

Daneben sind in der Raumzelle 1 Einbauplätze für vormontierte Einheiten der Gebäudetechnik vorhanden. In diese Einbauplätze sind an elektrotechnischen Einheiten der Gebäudetechnik eine Kontrollleuchteneinheit 27, ein Alarmknopf 28, ein Netzkoppler 29, eine Brandmeldezentrale (BMZ) 30, ein Feuermelder 6b, ein Feuerwehranzeigetableau (FAT) 31, ein Feuerwehrbedienfeld (FBF) 32 sowie ein Feuerwehrschlüsseldepot (FSD) 33 eingebracht worden.

Der Feuermelder 6b kann als an sich bekannter Rauch- oder Brandmelder ausgebildet sein.

### BEZUGSZEICHENLISTE

- 1: Raumzelle
- 2: Gebäude
- 3: Nutzraum
- 4: Tür
- 5: Fenster
- 6: Feuermelder
- 7: Bewegungsmelder
- 8: Rauchabzug
- 9: Türverriegelungsvorrichtung
- 10: elektrotechnische Leitung
- 11: Technikraum
- 12: Außenhülle
- 13: Transporthaken
- 14: Transportfuß
- 15: Raumzellentür
- 16: Schließvorrichtung
- 17: Schnittstelle zu einem gebäudeseitigen elektrotechnischen Netz
- 18: Schnittstelle zu einem externen elektrotechnischen Netz
- 19: Ablagesystem für Gebäudepläne
- 20: Energieversorgungseinrichtung
- 21: Klimaanlage
- 22: Beleuchtungseinrichtung
- 23: Telefon
- 24: Steckdosen
- 25: Ablagefläche
- 26: EDV-Schnittstelle
- 27: Kontrollleuchteneinheit
- 28: Alarmknopf
- 29: Netzkoppler
- 30: Brandmeldezentrale (BMZ)
- 31: Feuerwehranzeigetableau (FAT)
- 32: Feuerwehrbedienfeld (FBF)
- 33: Feuerwehrschlüsseldepot (FSD)

## Patentansprüche

1. Raumzelle (1) zur Aufnahme von elektrotechnischen Einheiten der Gebäudetechnik, welche im vorgefertigten Zustand transportabel ist, mit
- einer selbsttragenden, witterungsbeständigen Außenhülle (12),
- mindestens einer Schnittstelle zu einem gebäudeseitigen elektrotechnischen Netz (17a, 17b, 17c, 17d),
- mindestens einer Schnittstelle zu einem externen elektrotechnischen Netz (18), und
- Einbauplätzen für vormontierte Einheiten der Gebäudetechnik,
**dadurch gekennzeichnet, dass** die Raumzelle aufweist:
- mindestens einer Klimaanlage (21) zur Beeinflussung des Klimas innerhalb der Raumzelle,
wobei in die Einbauplätze für vormontierte Einheiten der Gebäudetechnik eine Brandmeldezentrale (BMZ) (30), ein Feuerwehranzeigetableau (FAT) (31), ein Feuerwehrbedienfeld (FBF) (32) und/oder ein Feuerwehrschlüsseldepot (FSD) (33) eingebracht sind.

2. Raumzelle nach Anspruch 1 mit mindestens einer Transporthilfseinrichtung (13, 14).

3. Raumzelle nach einem der vorherigen Ansprüche mit einer Energieversorgungseinrichtung (20).

4. Raumzelle nach einem der vorherigen Ansprüche mit einer Kommunikationseinrichtung (23).

5. Raumzelle nach einem der vorherigen Ansprüche, wobei über die Schnittstelle zu einem gebäudeseitigen elektrotechnischen Netz (17a, 17b, 17c, 17d) eine Verbindung zu einem gebäudeseitigen elektrotechnischen Netz herstellbar ist, welches mindestens einen Sensor (6, 7) und/oder mindestens einem Aktor (8, 9) aufweist.

6. Raumzelle nach einem der vorherigen Ansprüche, wobei eine elektrotechnische Einheit als Alarm- und/oder Sicherheitssystem ausgebildet ist.

7. Raumzelle nach einem der vorherigen Ansprüche, wobei eine Einheit als Brandmeldezentrale (BMZ) (30) ausgebildet ist.

8. Raumzelle nach einem der vorherigen Ansprüche, wobei mindestens eine Einheit der Gebäudetechnik als Feuermelder (6) ausgebildet ist.

## Claims

1. Module (1) for receiving electrical construction-engineering units, which module can be transported in the prefabricated state, comprising
- a self-supporting, weather-resistant outer shell (12),
- at least one interface to a building-end electrical supply system (17a, 17b, 17c, 17d),
- at least one interface to an external electrical supply system (18), and
- installation spaces for preassembled construction-engineering units,
**characterized in that** the module has:
- at least one air-conditioning system (21) for influencing the climate within the module,
wherein a central fire alarm control system (BMZ) (30), a fire service indicator panel (FAT) (31), a fire service operating panel (FBF) (32) and/or a fire service keybox (FSD) (33) are inserted into the installation spaces for preassembled construction-engineering units.

2. Module according to Claim 1, comprising at least one transportation aid (13, 14).

3. Module according to either of the preceding claims, comprising a power supply device (20).

4. Module according to one of the preceding claims, comprising a communications device (23).

5. Module according to one of the preceding claims, wherein a connection to a building-end electrical supply system can be established by means of the interface to a building-end electrical supply system (17a, 17b, 17c, 17d), the said building-end electrical supply system having at least one sensor (6, 7) and/or at least one actuator (8, 9).

6. Module according to one of the preceding claims, wherein an electrical unit is in the form of an alarm and/or security system.

7. Module according to one of the preceding claims, wherein a unit is in the form of a central fire alarm control system (BMZ) (30).

8. Module according to one of the preceding claims, wherein at least one construction-engineering unit is in the form of a fire alarm (6).

## Revendications

1. Cellule spatiale (1) destinée à reprendre des unités électrotechniques du bâtiment transportables à l'état préfabriqué, la cellule spatiale présentant
une enveloppe extérieure (12) autoportante et résistant aux intempéries,
au moins une interface avec un réseau électrotechnique (17a, 17b, 17c, 17d) d'un bâtiment,
au moins une interface avec un réseau électrotechnique externe (18) et
des emplacements de montage prévus pour des unités prémontées de la technique du bâtiment,
**caractérisée en ce que**
la cellule spatiale présente au moins une installation de climatisation (21) qui agit sur le climat qui règne à l'intérieur de la cellule spatiale et
**en ce qu'**une centrale (BMZ) (30) d'avertissement incendie, un tableau d'affichage (FAT) (31) pour la lutte contre le feu, un panneau de commande (FBF) (32) pour la lutte contre le feu et/ou un dépôt (FSD) (33) de clés pour la lutte contre le feu sont placés dans les emplacements de montage prévus pour les unités prémontées de la technique du bâtiment.

2. Cellule spatiale selon la revendication 1, présentant au moins un accessoire de transport (13, 14).

3. Cellule spatiale selon l'une des revendications précédentes, présentant un dispositif (20) d'alimentation en énergie.

4. Cellule spatiale selon l'une des revendications précédentes, présentant un dispositif (23) de communication.

5. Cellule spatiale selon l'une des revendications précédentes, dans laquelle une liaison avec un réseau électrotechnique d'un bâtiment peut être établie par l'intermédiaire de l'interface avec un réseau électrotechnique (17a, 17b, 17c, 17d) du bâtiment qui présente au moins un capteur (6, 7) et/ou au moins un actionneur (8, 9).

6. Cellule spatiale selon l'une des revendications précédentes, dans laquelle une unité électrotechnique est configurée comme système d'alarme et/ou de sécurité.

7. Cellule spatiale selon l'une des revendications précédentes, dans laquelle une unité électrotechnique est configurée comme centrale (BMZ) (30) d'avertissement d'incendie.

8. Cellule spatiale selon l'une des revendications précédentes, dans laquelle au moins une unité de la technique du bâtiment est configurée comme système (6) d'avertissement d'incendie.
